# EUROPEAN PATENT APPLICATION

(11) **EP 2 547 161 A1**
(43) Date of publication of application: **16.01.2013**
(21) Application number: 11753409.9
(22) Date of filing: 09.03.2011
(51) Int. Cl.: H04W 72/08, H04W 84/10

(54) **WIRELESS COMMUNICATION SYSTEM, HIGH-POWER BASE STATION, LOW-POWER BASE STATION, AND WIRELESS COMMUNICATION METHOD**

(30) Priority: 12.03.2010 JP 2010055519
(71) Applicant: Kyocera Corporation, Kyoto-shi Kyoto 612-8501 (JP)
(72) Inventor: YAMAZAKI, Chiharu, Yokohama-shi Kanagawa 224-8502 (JP)
(74) Representative: Schwabe - Sandmair - Marx
(86) International application number: PCT/JP2011/055537
(87) International publication number: WO 2011/111751

(57) **Abstract**

A wireless communication system (1) comprises: a low-power base station (100); a wireless terminal (300) which is connected to the low-power base station (100); a high-power base station (200) having a greater transmission output than the low-power base station (100); and wireless terminals (400, 401) which are connected to the high-power base station (200). The low-power base station (100) transmits resource allocation information, which indicates the state of wireless resource allocation to the wireless terminal (300) by the low-power base station (100), to the high-power base station (200). The high-power base station (200) carries out suitable communication control of and/or wireless resource allocation to the wireless terminals (400, 401), on the basis of the received resource allocation information.

## Description

### TECHNICAL FIELD

The present invention relates to a radio communication system in which different types of base stations are used together with each other, a high power base station, a low power base station, and a radio communication method.

### BACKGROUND ART

Conventionally, in a cellular radio communication system, a wide service area is divided into communication area units called cells and base stations performing radio communication with radio terminals in the communication areas are installed in units or communication area, so that the wide service area is planarly covered. As such a base station, a high power base station (a so-called macro cell base station) with high transmission power is used.

In recent years, a low power base station (a so-called pico cell base station or femto cell base station) with transmission power lower than that of the high power base station has been highlighted. The low power base station is installed in a cell of the high power base station, so that it is possible to distribute a load of the high power base station to the low power base station. In addition, a radio communication environment, in which the high power base station and the low power base station are used together with each other, is called a Heterogeneous Environment (for example, refer to Non Patent Literature 1).

### PRIOR ART DOCUMENT

### PATENT DOCUMENT

Non-Patent Document 1: 3GPP R1-09343 "Uplink performance evaluation in heterogeneous Environment"

### SUMMARY OF THE INVENTION

Meanwhile, in radio communication between a radio terminal and a base station, control information is also transmitted/received, in addition to user data. Since the control information is required information in the radio communication between the radio terminal and the base station, when it is not possible to receive the control information from the base station, the radio terminal cannot perform the radio communication with the base station.

In the Heterogeneous Environment, since the transmission power (the transmission power) of the control information of the low power base station is low, only a radio terminal located aground the low power base station can perform radio communication with the low power base station. In such a situation, when it is not possible for the radio terminal to receive the control information from the low power base station due to interference, a communication area covered by the low power base station is narrowed, resulting in a problem that a load distribution between the base stations is not sufficiently achieved.

Therefore, it is an object of the present invention to provide a radio communication system capable of suppressing inter-base station interference in a Heterogeneous Environment, a high power base station, a low power base station, and a radio communication method.

To solve the above problem, the present invention includes the following features. A first feature of the present invention is summarized asa radio communication system comprising: a low power base station (low power base station 100); a first radio terminal (radio terminal 300) connected to the low power base station; a high power base station (high power base station 200) with transmission power higher than transmission power of the low power base station; and a second radio terminal (radio terminal 400, radio terminal 401) connected to the high power base station, wherein the low power base station transmits resource assignment information to the high power base station, the resource assignment information indicating a state of radio resource assignment to the first radio terminal by the low power base station, and the high power base station performs radio resource assignment and/or adaptive communication control for the second radio terminal based on the resource assignment information received from the low power base station.

In such a radio communication system, the high power base station recognizes the state of radio resource assignment to a first radio terminal by the low power base station, and performs radio resource assignment and/or adaptive communication control for a second radio terminal. Thus, mutual interference between the high power base station and the low power base station is suppressed in the Heterogeneous Environment, so that it is possible to sufficiently achieve a load distribution between the base stations.

A second feature of the present invention is summarized as that the high power base station stops an assignment of a radio resource, corresponds to a radio resource assigned to the first radio terminal, to the second radio terminal, based on the resource assignment information.

A third feature of the present invention is summarized as that the high power base station assigns a radio resource, which has been assigned to the first radio terminal, to the second radio terminal among a plurality of second radio terminals, said second radio terminal satisfies at least one of that propagation loss with the low power base station is equal to or more than a first predetermined value, and transmission power density is smaller than a second predetermined value.

A fourth feature of the present invention is summarized as that the high power base station assigns a radio resource, which has been assigned to the first radio terminal, to the second radio terminal among a plurality of second radio terminals, said second radio terminal has interference power, which is estimated by propagation loss with the low power base station and transmission power density, and which is applied to radio communication between the first radio terminal and the low power base station, is smaller than the third predetermined value.

A fifth feature of the present invention is summarized as that the high power base station corrects a communication quality required when the adaptive communication control is performed.

A sixth feature of the present invention is summarized as a radio communication system comprising: a low power base station (low power base station 100); a first radio terminal (radio terminal 300) connected to the low power base station; a high power base station (high power base station) with transmission power higher than transmission power of the low power base station; and a second radio terminal (radio terminal 400, radio terminal 401) connected to the high power base station, wherein the low power base station transmits first resource assignment information to the high power base station, the first resource assignment information indicating a state of radio resource assignment to the first radio terminal by the low power base station, and the high power base station controls transmission or non-transmission of the first resource assignment information to the first radio terminal based on the first resource assignment information received from the low power base station, and second resource assignment information indicating a state of radio resource assignment to the second radio terminal by the high power base station.

In such a radio communication system, the high power base station recognizes the state of the radio resource assignment to the first radio terminal by the low power base station and the state of the radio resource assignment to the second radio terminal by the high power base station, and controls the transmission or non-transmission of the first resource assignment information, indicating the state of the radio resource assignment to the first radio terminal by the low power base station, to the first radio terminal. Thus, when it is assumed that a radio resource has been assigned to the first radio terminal, if it is probable that the high power base station is affected by interference, the first resource assignment information is prevented from being transmitted from the high power base station to the first radio terminal, so that a radio resource is prevented from being assigned to the first radio terminal, resulting in the suppression of interference and the sufficient achievement of a load distribution between the base stations in the Heterogeneous Environment.

A seventh feature of the present invention is summarized as that the high power base station controls so as to stop the transmission of the first resource assignment information to the first radio terminal, when a first condition is satisfied and at least one of a second to fourth conditions is satisfied, the first condition indicating that radio communication by the first radio terminal applies an interference amount, which is equal to or more than a fourth predetermined value, to radio communication by the high power base station; the second condition indicating that a radio resource assigned to the first radio terminal is to be used in the second radio terminal; the third condition indicating that a difference obtained by subtracting throughput of the second radio terminal from throughput of the first radio terminal is equal to or more than a fifth predetermined value; and the fourth condition indicating that radio communication of the second radio terminal does not satisfy a required quality or the communication quality of the second radio terminal requires a real time performance.

An eighth feature of the present invention is summarized as a high power base station with transmission power higher than transmission power of a low power base station, comprising: an inter-base station communication unit (wired communication unit 240) configured to receive resource assignment information from the low power base station, the resource assignment information indicating a state of radio resource assignment to the first radio terminal by the low power base station; and a communication control unit (communication control unit 221) configured to perform radio resource assignment and/or adaptive communication control for a second radio terminal, which is connected to the high power base station, based on the resource assignment information.

A ninth feature of the present invention is summarized as that a high power base station with transmission power higher than transmission power of a low power base station, comprising: an inter-base station communication unit (wired communication unit 240) configured to receive first resource assignment information from the low power base station, the first resource assignment information indicating a state of radio resource assignment to the first radio terminal by the low power base station; and a communication control unit (communication control unit 223.) configured to control transmission or non-transmission of the first resource assignment information to the first radio terminal, based on the first resource assignment information, and second resource assignment information indicating a state of radio resource assignment to a second radio terminal by the high power base station.

A tenth feature of the present invention is summarized as a low power base station with transmission power lower than transmission power of a high power base station, comprising^{:} an inter-base station communication unit configured to transmit resource assignment information indicating a state of radio resource assignment to a radio terminal connected to the low power base station, to the high power base station in order for the high power base station to perform radio resource assignment and/or adaptive communication control for a radio terminal connected to the high power base station.

An eleventh feature of the present invention is summarized as a radio communication method comprising a step of transmitting, by a low power base station with transmission power lower than transmission power of a high power base station, resource assignment information indicating a state of radio resource assignment to the first radio terminal by the low power base station, to the high power base station; and a step of performing, by the high power base station, radio resource assignment and/or adaptive communication control for a second radio terminal connected to the high power base station, based on the resource assignment information received from the low power base station.

A twelfth feature of the present invention is summarized as a radio communication method comprising: a step of transmitting, by a low power base station with transmission power lower than transmission power of a high power base station, first resource assignment information indicating a state of radio resource assignment to the first radio terminal by the low power base station, to the high power base station; and a step of controlling, by the high power base station, transmission or non-transmission of the first resource assignment information to the first radio terminal, based on the first resource assignment information received from the low power base station, and second resource assignment information indicating a state of radio resource assignment to a second radio terminal by the high power base station.

According to the present invention, it is possible to provide a radio communication system capable of suppressing inter-base station interference in a Heterogeneous Environment, a high power base station, a low power base station, a radio terminal, and a radio communication method.

### BRIEF DESCRIPTION OF THE DRAWING

[Fig. 1] Fig. 1 is a diagram illustrating the schematic configuration of a radio communication system according to an embodiment of the present invention.
[Fig. 2] Fig. 2 is a block diagram illustrating the configuration of a low power base station according to the embodiment of the present invention.
[Fig. 3] Fig. 3 is a block diagram illustrating the configuration of a high power base station according to the embodiment of the present invention.
[Fig. 4] Fig. 4 is an operation sequence diagram illustrating a first operation of the radio communication system according to the embodiment of the present invention.
[Fig. 5] Fig. 5 is an operation sequence diagram illustrating a second operation of the radio communication system according to the embodiment of the present invention.

### MODES FOR CARRYING OUT THE INVENTION

Next, an embodiment of the present invention will be described with reference to the drawings. Specifically, the embodiment of the present invention will be described in sequence of (1) Schematic configuration of radio communication system, (2) Detailed configuration of radio communication system, (3) Operation of radio communication system, (4) Effect of embodiments, and (5) Other embodiments. It is to be noted that the same or similar reference numerals are applied to the same or similar parts through the drawings in the following embodiments.

### (1) Schematic configuration of radio communication system

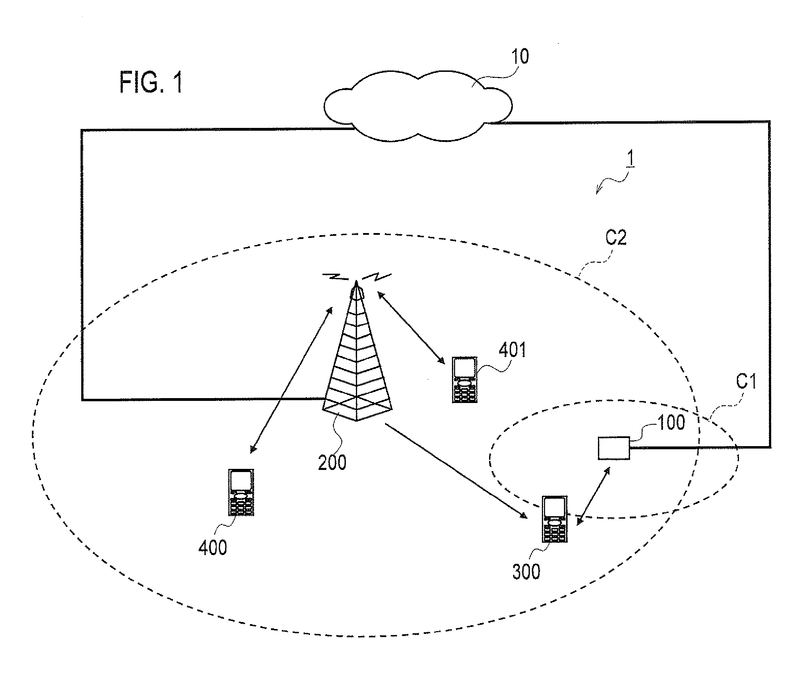

Fig. 1 is a diagram illustrating the schematic configuration of a radio communication system 1 according to the present embodiment. The radio communication system 1, for example, has a configuration based on an LTE (Long Term Evolution) Release 9 which is a 3.9th generation (3.9G) cellular radio communication system, or an LTE-Advanced positioned as a 4th generation (4G) cellular radio communication system. Hereinafter, the LTE Release 9 and the LTE-Advanced will be generically referred to as LTE.

The radio communication system 1 includes a low power base station (a low output power base station, a small output base station) 100, a high power base station (a high output power base station, a large output base station) 200, a radio terminal 300, a radio terminal 400, and a radio terminal 401. The low power base station 100 has transmission power lower than that of the high power base station 200. The low power base station 100 is installed in a macro cell C2 mainly for the purpose of distributing a load of the high power base station 200. In addition, in the LTE, a base station is called eNB and a radio terminal is called UE (User Equipment).

In the present embodiment, the low power base station 100 is a pico cell base station that forms a pico cell C1 which is a communication area having a radius from about several tens of meters to about one hundred meters. In addition, the pico cell is also called a hot zone. Furthermore, the high power base station 200 is a macro cell base station that forms a macro cell C2 which is a communication area having a radius from about several hundreds of meters to about several kilometers. As described above, in the radio communication system 1, a Heterogeneous Environment is provided.

The radio terminal 300 is connected to the low power base station 100. That is, the low power base station 100 in the present embodiment is a connection destination base station (a serving base station) of the radio terminal 300.

The radio terminal 400 and the radio terminal 401 are connected to the high power base station 200. That is, the high power base station 200 in the present embodiment is a connection destination base station (a serving base station) of the radio terminal 400 and the radio terminal 401.

The low power base station 100 and the high power base station 200 are connected to a core network 10 which is a wired communication network. The core network 10 is provided by a communication provider and configured by routers (not illustrated) and the like. The low power base station 100 and the high power base station 200 can directly perform base station communication via a connection which is a logical communication path set in the core network 10. The connection is called an X2 interface in the LTE.

In the present embodiment, in an uplink between the radio terminal 300 and the low power base station 100, an uplink control channel (PUCCH: Physical Uplink Control CHannel), on which control information is transmitted, and an uplink shared channel (PUSCH: Physical Uplink Shared CHannel), on which user data is transmitted, are set. In a downlink between the radio terminal 300 and the low power base station 100, a downlink control channel (PDCCH: Physical Downlink Control CHannel), on which control information is transmitted, and a downlink shared channel (PDSCH: Physical Downlink Shared CHannel), on which user data is transmitted, are set.

In an uplink between the radio terminal 400 and the radio terminal 401, and the high power base station 200, PUCCH and PUSCH are set. In a downlink between the radio terminal 400 and the radio terminal 401 and the high power base station 200, PDCCH and PDSCH are set.

In the present embodiment, the high power base station 200 performs radio resource assignment or adaptive communication control for the radio terminal 400 and the radio terminal 401 based on scheduling information as resource assignment information, which indicates the state of radio resource assignment to the radio terminal 300 by the low power base station 100.

### (2) Detailed configuration of radio communication system

Next, detailed configuration of the radio communication system 1 will be described. Specifically, (2.1) Configuration of low power base station and (2.2) Configuration of high power base station will be described. Hereinafter, only configurations related to the present invention will be described.

### (2.1) Configuration of low power base station

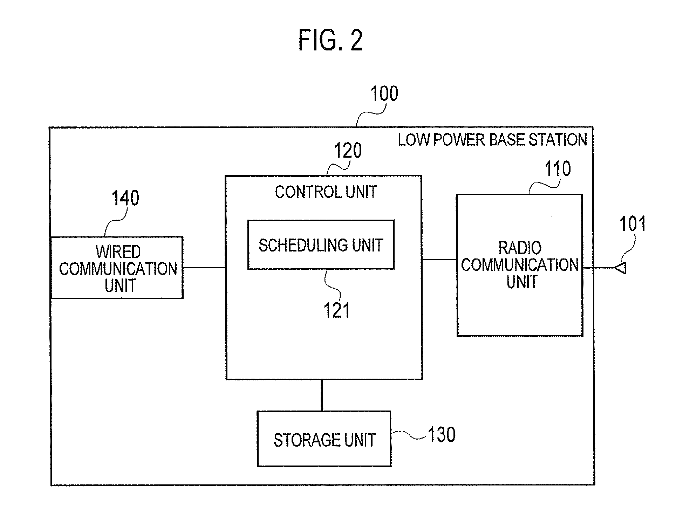

Fig. 2 is a block diagram illustrating the configuration of the low power base station 100. As illustrated in Fig. 2, the low power base station 100 includes an antenna unit 101, a radio communication unit 110, a control unit 120, a storage unit 130, and a wired communication unit 140.

The radio communication unit 110, for example, is configured using a radio frequency (RF) circuit, a baseband (BB) circuit, and the like, and transmits/receives a radio signal to/from the radio terminal 300. Furthermore, the radio communication unit 110 performs modulation of a transmission signal and demodulation of a reception signal.

The control unit 120, for example, is configured using CPU, and controls various functions provided in the low power base station 100. The storage unit 130, for example, is configured using a memory, and stores various types of information used for the control and the like of the low power base station 100. The wired communication unit 140 communicates with another apparatus, such as the high power base station 200, via the core network 10.

The control unit 120 includes a scheduling unit 121.

The scheduling unit 121 assigns a radio resource to the radio terminal 300 according to a scheduling algorithm such as proportional fairness. The radio resource is a resource block (RB) which is uniquely specified by a frequency and a time.

The scheduling unit 121 generates information, which indicates a state of radio resource assignment to the radio terminal 300, specifically, a radio resource assigned to the radio terminal 300 at the present moment or a radio resource to be assigned to the radio terminal 300 afterward, as scheduling information (hereinafter, referred to as low power scheduling information). The low power scheduling information is one or control information and corresponds to resource assignment information. Furthermore, the low power scheduling information includes identification information (hereinafter, referred to as terminal identification information) of the radio terminal 300 to which a radio resource is to be assigned.

The wired communication unit 140 transmits the low power scheduling information generated by the scheduling unit 121 to the high power base station 200 via the X2 interface.

### (2.2) Configuration of high power base station

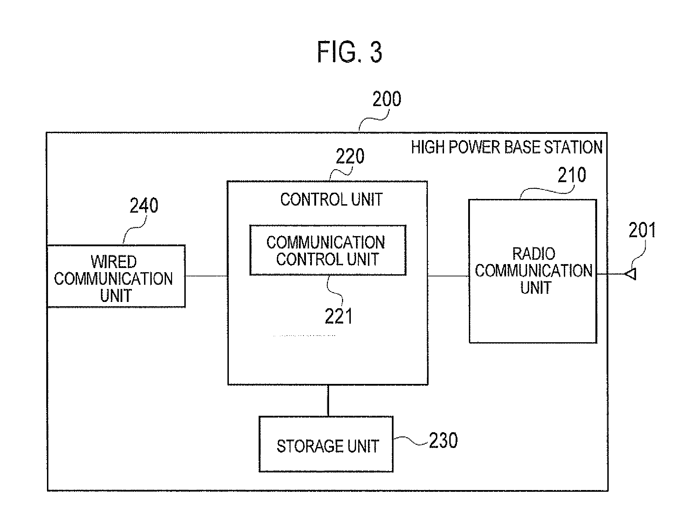

Fig. 3 is a block diagram illustrating the configuration of the high power base station 200. As illustrated in Fig. 3, the high power base station 200 includes an antenna unit 201, a radio communication unit 210, a control unit 220, a storage unit 230, and a wired communication unit 240.

The radio communication unit 210, for example, is configured using an RF circuit, a BB circuit, and the like, transmits/receives a radio signal to/from the radio terminal 400 and the radio terminal 401, and transmits the low power scheduling information to the radio terminal 300. Furthermore, the radio communication unit 110 performs modulation of a transmission signal and demodulation of a reception signal.

The control unit 220, for example, is configured using a CPU, and controls various functions provided in the high power base station 200. The storage unit 230, for example, is configured using a memory, and stores various types of information used for the control and the like of the high power base station 200.

The wired communication unit 240 corresponds to an inter-base station communication unit that performs inter-base station communication with the low power base station 100 using the X2 interface. The wired communication unit 240 receives the low power scheduling information from the low power base station 100, which is required for radio communication with the radio terminal 300 and the low power base station 100 located in the macro cell C2 formed by the high power base station 200.

The control unit 220 includes a communication control unit 221.

The communication control unit 221 performs the radio resource assignment and/or the adaptive communication control for the radio terminal 400 and the radio terminal 401 based on the low power scheduling information received from the low power base station 100. Specifically, the following first to eighth processes are performed.

### (First process)

The communication control unit 221 specifies a resource block to be assigned to the radio terminal 300 based on the low power scheduling information received from the low power base station 100. The communication control unit 221 stops the assignment of the specified resource block to the radio terminal 400 and the radio terminal 401, and assigns a resource block (hereinafter, referred to as another resource block) other than the specified resource block. Alternatively, when the another resource block is not in use, the communication control unit 221 assigns the another resource block to the radio terminal 400 and the radio terminal 401, in preference to the specified resource block.

### (Second process)

The communication control unit 221 specifies a resource block to be assigned to the radio terminal 300 based on the low power scheduling information received from the low power base station 100. In the case of assigning the specified resource block to the radio terminal 400 and the radio terminal 401, the communication control unit 221 acquires propagation loss (path loss) between the radio terminal 400 and the radio terminal 401, and the low power base station 100. The propagation loss includes distance attenuation, shadowing loss, and feature pass loss.

For example, the low power base station 100 receives radio signals from the radio terminal 400 and the radio terminal 401 as interference signals, and measures power of the interference signals. The low power base station 100 transmits the measured power of the interference signals to the high power base station 200 via the X2 interface. The communication control unit 221 receives the power of the interference signals, acquires prescribed transmission power density of the radio terminal 400 and the radio terminal 401, and acquires the difference between the transmission power density and the power of the interference signals as propagation loss.

Furthermore, the radio terminal 400 (the radio terminal 401) calculates propagation loss between the radio terminal 400 (the radio terminal 401) and the low power base station 100 based on the amount of transmission power of the low power base station 100, which has been acquired in advance by the radio terminal 400 (the radio terminal 401), and the value of reception power of a downlink reference signal from the low power base station 100, which has been received in the radio terminal 400 (the radio terminal 401). The radio terminal 400 (the radio terminal 401) transmits a report indicating the calculated propagation loss to the high power base station 200. The communication control unit 221 of the high power base station 200 acquires the propagation loss through the received report.

The following is an example of a method by the radio terminal 400 (the radio terminal 401) acquires the value of the transmission power of the low power base station 100. When the radio terminal 400 (the radio terminal 401) communicates with the low power base station 100, the radio terminal 400 (the radio terminal 401) stores the value of the transmission power of the low power base station 100. Consequently, when the radio terminal 400 (the radio terminal 401) communicates with the high power base station 200 after communicating with the low power base station 100, it is possible to calculate propagation loss using the stored value of the transmission power of the low power base station 100.

The following is another example. The low power base station 100 transmits information indicating the value of the transmission power of the low power base station 100 to the high power base station 200 via the X2 interface. The high power base station 200 acquires the information indicating the value of the transmission power of the low power base station 100 via the X2 interface. The high power base station 200 transmits the acquired information indicating the value of the transmission power of the low power base station 100 to the radio terminal 400 (the radio terminal 401). Consequently, it is possible for the radio terminal 400 (the radio terminal 401) to calculate propagation loss using the value of the transmission power of the low power base station 100 acquired from the high power base station 200.

The communication control unit 221 specifies a radio terminal from the radio terminal 400 or the radio terminal 401, in which the propagation loss with the low power base station 100 is equal to or more than a first predetermined value. Moreover, the communication control unit 221 assigns a resource block, which is to be assigned to the radio terminal 300, to the specified radio terminal. Preferably, this second process is used for assigning an uplink resource block.

### (Third process)

The communication control unit 221 specifies a resource block to be assigned to the radio terminal 300 based on the low power scheduling information received from the low power base station 100. In the case of assigning the specified resource block to the radio terminal 400 and the radio terminal 401, the communication control unit 221 acquires prescribed transmission power density of the radio terminal 400 and the radio terminal 401.

The communication control unit 221 specifies a radio terminal from the radio terminal 400 or the radio terminal 401, which has transmission power density smaller than a second predetermined value. Moreover, the communication control unit 221 assigns a resource block, which is to be assigned to the radio terminal 300, to the specified radio terminal. Preferably, this third process is used for assigning an uplink resource block.

### (Fourth process)

The communication control unit 221 specifies a resource block to be assigned to the radio terminal 300 based on the low power scheduling information received from the low power base station 100. In the case of assigning the specified resource block to the radio terminal 400 and the radio terminal 401, the communication control unit 221 acquires propagation loss between the radio terminal 400 and the radio terminal 401, and the low power base station 100, and acquires prescribed transmission power density of the radio terminal 400 and the radio terminal 401.

The communication control unit 221 specifies a radio terminal from the radio terminal 400 or the radio terminal 401, in which interference power, which is estimated by the propagation loss with the low power base station 100 and the transmission power density of the radio terminal 400 and the radio terminal 401, and is applied to radio communication between the radio terminal 300 and the low power base station 100, is smaller than a third predetermined value. Here, the interference power is calculated by the product (the sum in the case of decibel notation) of path loss and transmission power density. The communication control unit 221 assigns a resource block, which is to be assigned to the radio terminal 300, to the specified radio terminal. Preferably, this fourth process is used for assigning an uplink resource block.

### (Fifth process)

The communication control unit 221 specifies a resource block to be assigned to the radio terminal 300 based on the low power scheduling information received from the low power base station 100. In the case of assigning a resource block (another resource block), other than the specified resource block, to the radio terminal 400 and the radio terminal 401, the communication control unit 221 performs the following process. The communication control unit 221 corrects interference power, which is applied to the other resource block by the radio terminal 300, to be smaller than a measurement value. The interference power is required when performing the adaptive communication control. The adaptive communication control is control including a process of selecting a modulation scheme and a channel coding rate (MCS: Modulation and channel Coding Scheme) at the time of communication. Here, the measurement value of the interference power is a time average of the interference power measured by the high power base station 200 in a plurality of subframe periods of the past. In the correction of the interference power, the communication control unit 221 may employ an arbitrary fixed value as a correction value.

For example, when the low power scheduling information is received from a plurality of the low power base stations 100, the communication control unit 221 may employ, as the correction value, a function of the number of the low power base stations 100 serving as a transmission source of low power scheduling information indicating non-assignment of the another resource block. In this case, as the number of the low power base stations 100 serving as the transmission source of the low power scheduling information indicating the non-assignment of the another resource block is larger, the interference power is corrected to be smaller. Preferably, this fifth process is used for assigning an uplink resource block.

### (Sixth process)

The communication control unit 221 specifies a resource block to be assigned to the radio terminal 300 based on the low power scheduling information received from the low power base station 100. In the case of assigning the specified resource block to the radio terminal 400 and the radio terminal 401, the communication control unit 221 corrects interference power, which is applied by the radio terminal 300 and is required when performing the adaptive communication control of selecting the modulation scheme and the MCS to perform communication, to be larger than a measurement value. Similarly to the above, the measurement value of the interference power is the time average of the interference power measured by the high power base station 200 in a plurality of subframe periods of the past. In the correction of the interference power, the communication control unit 221 may employ an arbitrary fixed value as a correction value.

For example, when the low power scheduling information is received from a plurality of the low power base stations 100, the communication control unit 221 may employ, as the correction value, a function of the number of the low power base stations 100 serving as a transmission source of low power scheduling information indicating assignment of the specified resource block. In this case, as the number of the low power base stations 100 serving as the transmission source of the low power scheduling information indicating the assignment of the specified resource block is larger, the interference power is corrected to be larger. Preferably, this sixth process is used for assigning an uplink resource block.

### (Seventh process)

The communication control unit 221 specifies a resource block to be assigned to the radio terminal 300 based on the low power scheduling information received from the low power base station 100. In the case of assigning the resource block (another resource block), other than a specified resource block, to the radio terminal 400 and the radio terminal 401, the communication control unit 221 corrects a channel quality of the other resource block, which is a communication quality as a parameter required when performing the adaptive communication control, to be a value better than a measurement value.

Here, the measurement value of the channel quality has been measured in the radio terminal 400 and the radio terminal 401, and notified the high power base station 200. The radio terminal 400 and the radio terminal 401 may employ a time average of channel qualities measured in a plurality of subframe periods of the past, as the measurement value of the channel quality. In the correction of the channel quality, the communication control unit 221 may employ an arbitrary fixed value as a correction value.

For example, when the low power scheduling information is received from a plurality of the low power base stations 100, the communication control unit 221 may employ, as the correction value, a function of the number of the low power base stations 100 serving as a transmission source of low power scheduling information indicating non-assignment of the another resource block. In this case, as the number of the low power base stations 100 serving as the transmission source of the low power scheduling information indicating the non-assignment of the another resource block is larger, the channel quality is corrected to be better. Preferably, this seventh process is used for assigning a downlink resource block.

### (Eighth process)

The communication control unit 221 specifies a resource block to be assigned to the radio terminal 300 based on the low power scheduling information received from the low power base station 100. In the case of assigning the specified resource block to the radio terminal 400 and the radio terminal 401, the communication control unit 221 corrects channel quality of the other resource block, which is communication quality as a parameter required when performing the adaptive communication control, to be a value worse than a measurement value.

Similarly to the above, the measurement value of the channel quality has been measured in the radio terminal 400 and the radio terminal 401, and notified the high power base station 200. The radio terminal 400 and the radio terminal 401 may employ a time average of channel qualities measured in a plurality of subframe periods of the past, as the measurement value of the channel quality. In the correction of the channel quality, the communication control unit 221 may employ an arbitrary fixed value as a correction value.

For example, when the low power scheduling information is received from a plurality of the low power base stations 100, the communication control unit 221 may employ, as the correction value, a function of the number of the low power base stations 100 serving as a transmission source of low power scheduling information indicating assignment of the specified resource block. In this case, as the number of the low power base stations 100 serving as the transmission source of the low power scheduling information indicating the assignment of the specified resource block is larger, the channel quality is corrected to be worse. Preferably, this eighth process is used for assigning a downlink resource block.

After the above-mentioned first to eighth processes are performed, the communication control unit 221 generates information, which indicates the state of radio resource assignment to the radio terminal 400 and the radio terminal 401, specifically, a radio resource assigned to the radio terminal 400 and the radio terminal 401, as scheduling information (hereinafter, referred to as high power scheduling information) in each of the radio terminal 400 and the radio terminal 401, and outputs the same to the radio communication unit 210. The high power scheduling information is one of control information and corresponds to resource assignment information. Furthermore, the high power scheduling information includes identification information (hereinafter, referred to as terminal identification information) of the radio terminal 400 and the radio terminal 401 to which a radio resource is to be assigned, and information on the modulation scheme and the MCS in the adaptive communication control.

The radio communication unit 210 having received the high power scheduling information transmits the high power scheduling information to the radio terminal 400 and the radio terminal 401 via PDCCH.

Then, the communication control unit 221 generates high power scheduling information in each of the radio terminal 400 and the radio terminal 401, and outputs the same to the radio communication unit 210. The radio communication unit 210 having received the high power scheduling information transmits the high power scheduling information to the radio terminal 400 and the radio terminal 401 via PDCCH. The radio terminal 400 and the radio terminal 401 perform radio communication with the high power base station 200 using an assigned radio resource based on the received high power scheduling information.

Furthermore, based on the low power scheduling information received from the low power base station 100 and the high power scheduling information, the communication control unit 221 controls the transmission or non-transmission of the low power scheduling information to the radio terminal 300. Specifically, the following ninth process is performed.

### (Ninth process)

The communication control unit 221 assigns a radio resource to the radio terminal 400 and the radio terminal 401 according to the scheduling algorithm such as the proportional fairness. The radio resource is a resource block (RB) which is uniquely specified by a frequency and a time.

The communication control unit 221 generates information, which indicates a state of radio resource assignment to the radio terminal 400 and the radio terminal 401, specifically, a radio resource assigned to the radio terminal 400 and the radio terminal 401 at the present moment or a radio resource to be assigned to the radio terminal 400 and the radio terminal 401 afterward, as scheduling information (hereinafter, referred to as high power scheduling information) in each of the radio terminal 400 and the radio terminal 401. The high power scheduling information is one of control information and corresponds to resource assignment information. Furthermore, the high power scheduling information includes identification information (hereinafter, referred to as terminal identification information) of the radio terminal 400 and the radio terminal 401 to which a radio resource is to be assigned.

The communication control unit 221 determines whether to satisfy a condition (a non-transmission condition) under which the low power scheduling information to the radio terminal 300 is not transmitted.

Specifically, the communication control unit 221 determines whether to satisfy a first condition indicating that a radio communication by the radio terminal 300 applies an interference amount equal to or more than a fourth predetermined value, to a radio communication by the high power base station 200. Here, it is possible for the communication control unit 221 to receive a radio signal from the radio terminal 300 as an interference signal, and to measure power of the interference signal as the interference amount.

The communication control unit 221 determines based on the low power scheduling information and the high power scheduling information whether a second condition indicating that a radio resource assigned to the radio terminal 300 is to be used in one of the radio terminal 400 and the radio terminal 401 is satisfied.

The communication control unit 221 determines whether a third condition indicating that the difference obtained by subtracting each throughput of the radio terminal 400 and the radio terminal 401 from throughput of the radio terminal 300 is equal to or more than a fifth predetermined value is satisfied. Here, the communication control unit 221 acquires the throughputs of the radio terminal 400 and the radio terminal 401, which are measured by each of the radio terminal 400 and the radio terminal 401 and included in PUCCH. Furthermore, the communication control unit 221 acquires the throughput of the radio terminal 300, which is measured by the radio terminal 300 and transmitted via the low power base station 100.

The communication control unit 221 determines whether a fourth condition indicating that the throughput of at least one of the radio terminal 400 and the radio terminal 401 does not satisfy a prescribed required quality (QoS), or QoS in at least one of the radio terminal 400 and the radio terminal 401 corresponds to a real-time communication is satisfied.

When the first condition is satisfied and at least one of the second to fourth conditions is satisfied, the communication control unit 221 determines the non-transmission condition is satisfied, and controls so that the transmission of the low power scheduling information to the radio terminal 300 is stopped.

After the transmission of the low power scheduling information is stopped, when the first to eighth processes are performed, the communication control unit 221 regards that a resource block indicated by the low power scheduling information has not been assigned to the radio terminal 300, and assigns a resource block to the radio terminal 400 and the radio terminal 401.

Meanwhile, when the transmission of the low power scheduling information has not stopped, the communication control unit 221 outputs the low power scheduling information to the radio communication unit 210. The radio communication unit 210 having inputted the low power scheduling information transmits the low power scheduling information to the radio terminal 300 via PDCCH. Based on the received low power scheduling information, the radio terminal 300 performs radio communication with the low power base station 100 using an assigned resource block.

### (3) Operation of radio communication system

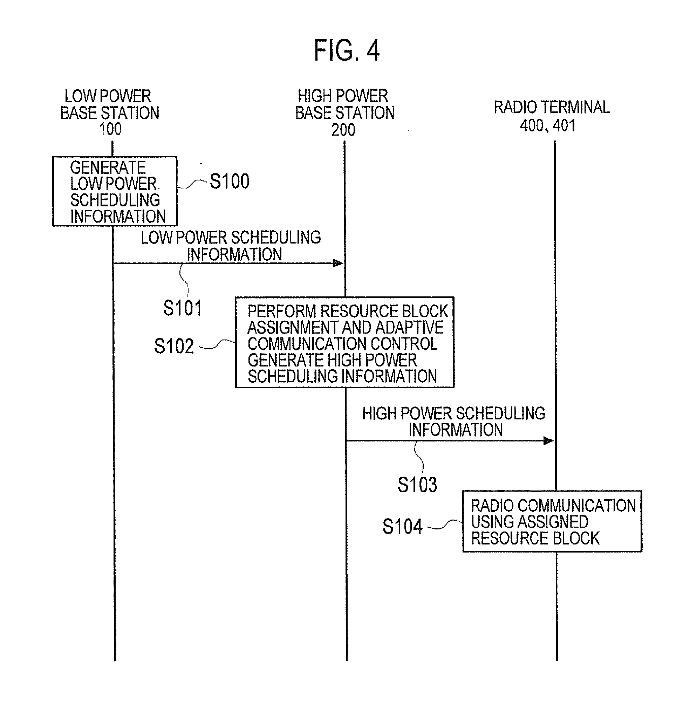

Fig. 4 is a sequence diagram illustrating a first operation of the radio communication system 1. The first operation is an operation performed when the first to eighth processes are performed by the communication control unit 221.

In step S100, the low power base station 100 generates low power scheduling information indicating the state of radio resource assignment to the radio terminal 300.

In step S101, the low power base station 100 transmits the low power scheduling information. The high power base station 200 receives the low power scheduling information.

In step S102, the high power base station 200 performs the radio resource assignment and the adaptive communication control for the radio terminal 400 and the radio terminal 401 based on the low power scheduling information. The high power base station 200 generates high power scheduling information indicating the state of radio resource assignment to the radio terminal 400 and the radio terminal 401.

In step S103, the high power base station 200 transmits the high power scheduling information. The radio terminal 400 and the radio terminal 401 receive the high power scheduling information.

In step S104, the radio terminal 400 and the radio terminal 401 perform radio communication with the high power base station 200 using an assigned resource block based on the received high power scheduling information.

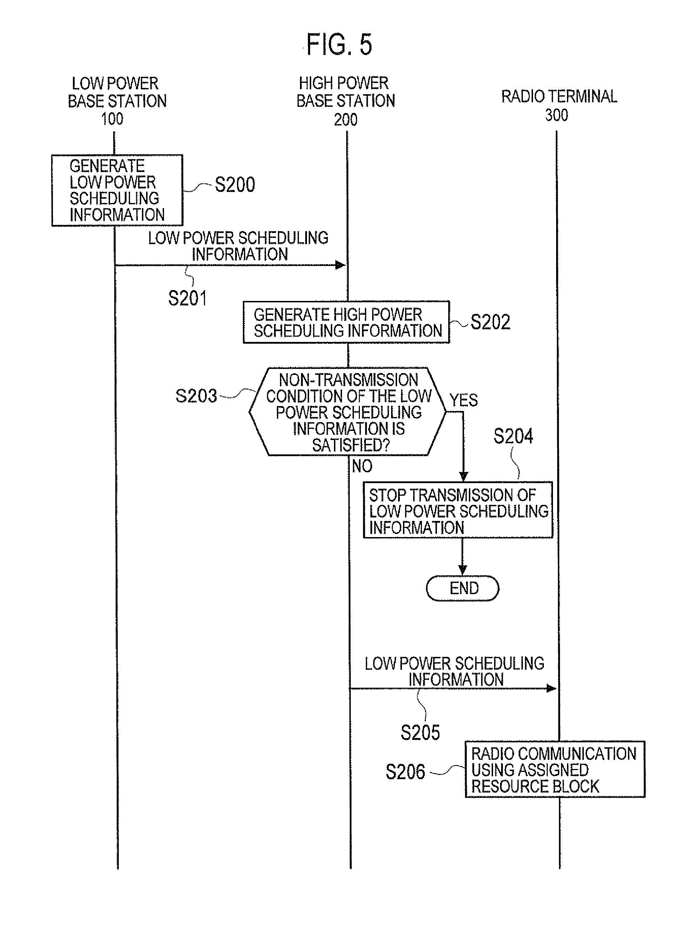

Fig. 5 is a sequence diagram illustrating a second operation of the radio communication system 1. The second operation is an operation performed when the ninth process is performed by the communication control unit 221.

In step S200, the low power base station 100 generates low power scheduling information indicating the state of radio resource assignment to the radio terminal 300.

In step S201, the low power base station 100 transmits the low power scheduling information. The high power base station 200 receives the low power scheduling information.

In step S202, the high power base station 200 generates high power scheduling information indicating the state of radio resource assignment to the radio terminal 400 and the radio terminal 401. In addition, the operation of the step S202 may be performed prior to the operation of the step S201.

In step S203, the high power base station 200 determines whether a non-transmission condition of the low power scheduling information is satisfied.

When the non-transmission condition is satisfied, the high power base station 200 stops the transmission of the low power scheduling information to the radio terminal 300 in step S204.

Meanwhile, when the non-transmission condition is not satisfied, the high power base station 200 transmits the low power scheduling information in step S205. The radio terminal 300 receives the low power scheduling information.

In step S206, the radio terminal 300 performs radio communication with the low power base station 100 using an assigned resource block based on the received low power scheduling information.

### (4) Effect of embodiments

As described above, it is possible for the radio communication system 1 to sufficiently achieve a load distribution between the low power base station 100 and the high power base station 200 in the Heterogeneous Environment.

Specifically, in the first process, the communication control unit 221 of the high power base station 200 stops the assignment of a resource block assigned to the radio terminal 300, and assigns another resource block to the radio terminal 400 and the radio terminal 401. Alternatively, when the another resource block is not in use, the communication control unit 221 assigns the another resource block to the radio terminal 400 and the radio terminal 401, in preference to the specified resource block.

Consequently, since the resource block assigned to the radio terminal 400 and the radio terminal 401 is different from the resource block assigned to the radio terminal 300, interference between the low power base station 100 and the high power base station 200 is suppressed, so that it is possible to sufficiently achieve a load distribution.

In the second to fourth processes, the communication control unit 221 assigns a resource block, which is to be assigned to the radio terminal 300, to a radio terminal of the radio terminal 400 or the radio terminal 401, wherein the propagation loss with the low power base station 100 is equal to or more than the first predetermined value, and the transmission power density of the radio terminal is smaller than the second predetermined value, and the interference power, which is applied to radio communication between the radio terminal 300 and the low power base station 100, is smaller than the third predetermined value.

Consequently, even when the resource block assigned to the radio terminal 400 and the radio terminal 401 overlaps the resource block assigned to the radio terminal 300, interference between the low power base station 100 and the high power base station 200 is maximally suppressed, so that it is possible to sufficiently achieve a load distribution.

In the fifth and seventh processes, in the case of assigning a resource block (another resource block), other than a resource block assigned to the radio terminal 300, to the radio terminal 400 and the radio terminal 401, the communication control unit 221 corrects communication quality of the another resource block as a parameter, which is required when performing the adaptive communication control, to be a value better than the measurement value.

When the measurement value of the communication quality is a time average of values measured in a plurality of the subframe periods of the past, the communication quality of a resource block of a corresponding subframe is significantly changed according to whether the resource block is used by the radio terminal 300. Thus, in the fifth and seventh processes, the communication quality of the another resource block is corrected to be a value better than the measurement value, so that it is possible to reduce a gap with an actual communication quality.

In the sixth and eighth processes, in the case of assigning a resource block, which is assigned to the radio terminal 300, to the radio terminal 400 and the radio terminal 401, the communication control unit 221 corrects communication quality of the another resource block as a parameter, which is required when performing the adaptive communication control, to be a value worse than the measurement value.

When the measurement value of the communication quality is a time average of values measured in a plurality of the subframe periods of the past, the communication quality of a resource block of a corresponding subframe is significantly changed according to whether the resource block is used by the radio terminal 300. Thus, in the sixth and eighth processes, the communication quality of the resource block assigned to the radio terminal 300 is corrected to be a value worse than the measurement value, so that it is possible to reduce a gap with an actual communication quality.

In the ninth process, from among: the first condition indicating that the radio communication by the radio terminal 300 applies the interference amount, which is equal to or more than the fourth predetermined value, to the radio communication by the high power base station 200; the second condition indicating that the radio resource assigned to the radio terminal 300 is to be used in one of the radio terminal 400 and the radio terminal 401; the third condition indicating that the difference obtained by subtracting each throughput of the radio terminal 400 and the radio terminal 401 from the throughput of the radio terminal 300 is equal to or more than the fifth predetermined value; and the fourth condition indicating that the throughput of at least one of the radio terminal 400 and the radio terminal 401 does not satisfy the prescribed QoS, or the QoS in at least one of the radio terminal 400 and the radio terminal 401 corresponds to the real-time communication, when the first condition is satisfied and at least one of the second to fourth conditions is satisfied, the communication control unit 221 performs the control of stopping the transmission of the low power scheduling information to the radio terminal 300.

Consequently, when it is assumed that a radio resource has been assigned to the radio terminal 300, if it is probable that the high power base station 200 is affected by interference, the low power scheduling information is prevented from being transmitted to the radio terminal 300 to avoid the interference, and interference between the low power base station 100 and the high power base station 200 is suppressed to sufficiently achieve a load distribution.

### (5) Other embodiments

As described above, the present invention has been described with the embodiments. However, it should not be understood that those descriptions and drawings constituting a part of the present disclosure limit the present invention. Further, various substitutions, examples, or operational techniques shall be apparent to a person skilled in the art based on this disclosure.

For example, in the above-mentioned embodiment, the case in which the inter-base station communication is wired communication has been described as an example. However, the inter-base station communication may be radio communication.

In the above-mentioned embodiment, the case in which the low power base station is a pico cell base station (a hot zone base station) has been described as an example. However, the low power base station may be a femto cell base station (a home eNB) with transmission power lower than that of the pico cell base station.

In the above-mentioned embodiment, the case in which the low power base station 100 is a serving base station of both an uplink and a downlink has been described as an example. However, it is probable that different base stations may be used as serving base stations between the uplink and the downlink in the future. In such a case, an uplink serving base station may be the low power base station 100 and a downlink serving base station may be the high power base station 200. The present invention is applicable to the case in which different base stations are used as serving base stations between the uplink and the downlink.

Particularly not mentioned in the above-mentioned embodiment, the antenna unit 101, the antenna unit 201, and an antenna unit 301 may include a plurality of antennas in order to perform SIMO (Single Input Multiple Output) or MIMO (Multiple Input Multiple Output) communication.

Thus, it must be understood that the present invention includes various embodiments that are not described herein. Therefore, the present invention is limited only by the specific features of the invention in the scope of the claims reasonably evident from the disclosure above.

In addition, the entire content of Japanese Patent Application No. 2010-055519 (filed on March 12, 2010) is incorporated in the present specification by reference.

### INDUSTRIAL APPLICABILITY

The radio communication system, the high power base station, and the radio communication method of the present invention can suppress inter-base station interference in a Heterogeneous Environment, and are useful to a radio communication system, a high power base station, and a radio communication method.

## Claims

1. A radio communication system comprising:
a low power base station;
a first radio terminal connected to the low power base station;
a high power base station with transmission power higher than transmission power of the low power base station; and
a second radio terminal connected to the high power base station,
wherein the low power base station transmits resource assignment information to the high power base station, the resource assignment information indicating a state of radio resource assignment to the first radio terminal by the low power base station, and
the high power base station performs radio resource assignment and/or adaptive communication control for the second radio terminal based on the resource assignment information received from the low power base station.

2. The radio communication system according to claim 1, wherein,
the high power base station stops an assignment of a radio resource, corresponds to a radio resource assigned to the first radio terminal, to the second radio terminal, based on the resource assignment information.

3. The radio communication system according to claim 1, wherein,
the high power base station assigns a radio resource, which has been assigned to the first radio terminal, to the second radio terminal among a plurality of second radio terminals, said second radio terminal satisfies at least one of that propagation loss with the low power base station is equal to or more than a first predetermined value, and transmission power density is smaller than a second predetermined value.

4. The radio communication system according to claim 1, wherein,
the high power base station assigns a radio resource, which has been assigned to the first radio terminal, to the second radio terminal among a plurality of second radio terminals, said second radio terminal has interference power, which is estimated by propagation loss with the low power base station and transmission power density, and which is applied to radio communication between the first radio terminal and the low power base station, is smaller than the third predetermined value.

5. The radio communication system according to claim 1, wherein the high power base station corrects a communication quality required when the adaptive communication control is performed.

6. A radio communication system comprising:
a low power base station;
a first radio terminal connected to the low power base station;
a high power base station with transmission power higher than transmission power of the low power base station; and
a second radio terminal connected to the high power base station,
wherein the low power base station transmits first resource assignment information to the high power base station, the first resource assignment information indicating a state of radio resource assignment to the first radio terminal by the low power base station, and
the high power base station controls transmission or non-transmission of the first resource assignment information to the first radio terminal based on the first resource assignment information received from the low power base station, and second resource assignment information indicating a state of radio resource assignment to the second radio terminal by the high power base station.

7. The radio communication system according to claim 6, wherein,
the high power base station controls so as to stop the transmission of the first resource assignment information to the first radio terminal, when a first condition is satisfied and at least one of a second to fourth conditions is satisfied, the first condition indicating that radio communication by the first radio terminal applies an interference amount, which is equal to or more than a fourth predetermined value, to radio communication by the high power base station; the second condition indicating that a radio resource assigned to the first radio terminal is to be used in the second radio terminal; the third condition indicating that a difference obtained by subtracting throughput of the second radio terminal from throughput of the first radio terminal is equal to or more than a fifth predetermined value; and the fourth condition indicating that radio communication of the second radio terminal does not satisfy a required quality or the communication quality of the second radio terminal requires a real time performance.

8. A high power base station with transmission power higher than transmission power of a low power base station, comprising:
an inter-base station communication unit configured to receive resource assignment information from the low power base station, the resource assignment information indicating a state of radio resource assignment to the first radio terminal by the low power base station; and
a communication control unit configured to perform radio resource assignment and/or adaptive communication control for a second radio terminal, which is connected to the high power base station, based on the resource assignment information.

9. A high power base station with transmission power higher than transmission power of a low power base station, comprising:
an inter-base station communication unit configured to receive first resource assignment information from the low power base station, the first resource assignment information indicating a state of radio resource assignment to the first radio terminal by the low power base station; and
a communication control unit configured to control transmission or non-transmission of the first resource assignment information to the first radio terminal, based on the first resource assignment information, and second resource assignment information indicating a state of radio resource assignment to a second radio terminal by the high power base station.

10. A low power base station with transmission power lower than transmission power of a high power base station, comprising
an inter-base station communication unit configured to transmit resource assignment information indicating a state of radio resource assignment to a radio terminal connected to the low power base station, to the high power base station in order for the high power base station to perform radio resource assignment and/or adaptive communication control for a radio terminal connected to the high power base station.

11. A radio communication method comprising:
a step of transmitting, by a low power base station with transmission power lower than transmission power of a high power base station, resource assignment information indicating a state of radio resource assignment to the first radio terminal by the low power base station, to the high power base station; and
a step of performing, by the high power base station, radio resource assignment and/or adaptive communication control for a second radio terminal connected to the high power base station, based on the resource assignment information received from the low power base station.

12. A radio communication method comprising:
a step of transmitting, by a low power base station with transmission power lower than transmission power of a high power base station, first resource assignment information indicating a state of radio resource assignment to the first radio terminal by the low power base station, to the high power base station; and
a step of controlling, by the high power base station, transmission or non-transmission of the first resource assignment information to the first radio terminal, based on the first resource assignment information received from the low power base station, and second resource assignment information indicating a state of radio resource assignment to a second radio terminal by the high power base station.
